# EUROPÄISCHE PATENTSCHRIFT

(11) **EP 2 331 843 B1**
(45) Veröffentlichungstag und Bekanntmachung des Hinweises auf die Patenterteilung: **04.03.2015**
(21) Anmeldenummer: 09778435.9
(22) Anmeldetag: 09.09.2009
(51) Int. Cl.: F16H 3/08, F16H 3/093, F16H 3/00

(54) **SCHALTBARES DOPPELRAD FÜR DOPPELKUPPLUNGSGETRIEBE SOWIE DOPPELKUPPLUNGSGETRIEBE**
SWITCHABLE DOUBLE GEAR WHEEL FOR A DOUBLE CLUTCH TRANSMISSION, AND DOUBLE CLUTCH TRANSMISSION
ROUE DOUBLE EMBRAYABLE DESTINÉE À UNE TRANSMISSION À DOUBLE ENGRENAGE ET TRANSMISSION À DOUBLE ENGRENAGE

(30) Priorität: 09.10.2008 DE 102008050964
(43) Veröffentlichungstag der Anmeldung: 15.06.2011
(73) Patentinhaber: Daimler AG, 70327 Stuttgart (DE)
(72) Erfinder: PFANNKUCHEN, Ingo, 88046 Friedrichshafen (DE); RÜDLE, Harald, 70499 Stuttgart (DE)
(74) Vertreter: JENSEN & SON
(86) Internationale Anmeldenummer: PCT/EP2009/006549
(87) Internationale Veröffentlichungsnummer: WO 2010/040436

(56) Entgegenhaltungen:
- EP-A- 1 323 953
- DE-A1-102004 001 961
- DE-A1-102004 043 939
- GB-A- 2 172 944
- JP-A- 8 074 949

## Beschreibung

Die Erfindung betrifft ein schaltbares Doppelrad für Doppelkupplungsgetriebe sowie ein Doppelkupplungsgetriebe.

Aus der DE 10 2004 049 832 A1 ist ein Doppelkupplungsgetriebe bekannt, mit welchem sieben Vorwärtsgänge und ein Rückwärtsgang darstellbar sind. Dieses Getriebe weist eine Hohl- und eine Innenwelle auf, die über eine Doppelkupplung an eine Antriebsmaschine kuppelbar sind. Neben der Hohl- und der Innenwelle sind eine erste und eine zweite Vorgelegewelle vorgesehen, deren Abtriebsritzel ein Antriebsrad eines Differentials antreiben. Zur Darstellung der sieben Vorwärtsgänge und des Rückwärtsgangs sind an der Hohlwelle zwei und an der Innenwelle drei Festräder ausgebildet, die mit Losrädern, die auf den Vorgelegewellen gelagert sind, kämmen. Eines dieser Losräder ist zur Darstellung des Rückwärtsgangs dem Losrad zur Darstellung des dritten Vorwärtsgangs benachbart angeordnet, was zur Folge hat, dass bei einem Fahren im dritten Gang hohe Differenzdrehzahlen zwischen diesen beiden Losrädern auftreten, mit der Folge, dass die Lagerung der genannten Losräder einen hohen Aufwand erfordert.

Aus der gattungsbildenden DE 2004 043 939 A1 ist ein Doppelkupplungsgetriebe bekannt, mit welchem sechs Vorwärtsgänge und ein Rückwärtsgang darstellbar sind. Dieses Getriebe weist ein schaltbares Doppelrad mit einem gegenüber einer Vorgelegewelle zu lagernden ersten Radkörper und einen zweiten Radkörper auf, wobei die beiden Radkörper verdrehfest miteinander kuppelbar sind. Es ist eine Lagerhülse vorgesehen, die einstückig mit dem ersten Radkörper ausgebildet ist und zur Lagerung des zweiten Radkörpers einen ersten Lagerbereich aufweist.

Der Erfindung liegt die Aufgabe zugrunde, ein einfach und kostengünstig herstellbares Doppelkupplungsgetriebe zur Verfügung zu stellen.

Die Lösung dieser Aufgabe erfolgt erfindungsgemäß mit den Merkmalen des Anspruchs 1.

Bei einem schaltbaren Doppelrad für ein Doppelkupplungsgetriebe mit einem gegenüber einer Welle zu lagernden ersten Radkörper und einem zweiten Radkörper, welche verdrehfest miteinander kuppelbar sind, eine Lagerhülse vorgesehen, die verdrehfest mit dem ersten Radkörper ausgebildet ist und zur Lagerung des zweiten Radkörpers einen ersten Lagerbereich aufweist. Durch die Lagerhülse wird an dem Doppelrad der zweite Radkörper aus dem Kraftfluss zur axialen Abstützung des ersten Radkörpers herausgenommen, wodurch die bei der Lagerung des ersten Radkörpers zu beachtenden Differenzdrehzahlen sehr gering sind und sich ein geringer Lagerungsaufwand ergibt.

Erfindungsgemäß ist die Lagerhülse als separates Bauelement gefertigt und mit dem ersten Radkörper verpresst. Eine solche Ausgestaltung erleichtert die Herstellung der Komponenten und die spätere Montage des schaltbaren Doppelrades.

Gemäß einer besonders bevorzugten Ausgestaltung der Erfindung ist zur verdrehfesten Verbindung des ersten und des zweiten Radkörpers eine Kupplung mit einer Schaltmuffe vorgesehen. Eine solche Kupplung erlaubt eine wechselseitige Abstützung des ersten und des zweiten Radkörpers, und sie trägt damit zu einer vereinfachten Lagerung bei.

Gemäß einer weiteren bevorzugten Ausgestaltung der Erfindung weist die Lagerhülse auf ihrer Außenseite einen ersten Aufnahmebereich für ein erstes Nadellager zur Lagerung des zweiten Radkörpers auf. Eine solche Lagerung lässt sich aus Standardkomponenten aufbauen und damit besonders einfach in der Praxis umsetzen.

Gemäß einer weiteren bevorzugten Ausgestaltung der Erfindung ist vorgesehen, dass die Lagerhülse auf ihrer Innenseite, vorzugsweise über ihre gesamte axiale Erstreckung, einen zweiten Aufnahmebereich für ein zweites Nadellager zur Lagerung gegenüber der Welle aufweist. Auch durch eine solche Ausgestaltung wird die Umsetzung der Erfindung in die Praxis erleichtert.

Gemäß einer weiteren bevorzugten Ausgestaltung der Erfindung ist vorgesehen, dass ein erster Ringabschnitt des ersten Radkörpers und ein zweiter Ringabschnitt des zweiten Radkörpers als aufeinander bezogene Gleitlagerflächen ausgebildet sind. Eine solche Ausgestaltung ermöglicht einen Aufbau eines schaltbaren Doppelrades unter Verwendung weniger Komponenten, wobei die axiale Abstützung der Radkörper unter Einhaltung enger Toleranzen möglich ist.

Gemäß einer weiteren bevorzugten Ausgestaltung der Erfindung ist vorgesehen, dass die Lagerhülse eine stirnseitige Abstützfläche aufweist. Eine solche Ausgestaltung erleichtert die axiale Abstützung des erfindungsgemäß schaltbaren Doppelrades.

Gemäß einer weiteren bevorzugten Ausgestaltung der Erfindung ist vorgesehen, dass die Lagerhülse einen ersten Anschlag zur axialen Abstützung des zweiten Radkörpers aufweist. Eine solche Ausgestaltung erleichtert die Lagerung des zweiten Radkörpers gegenüber dem ersten Radkörper.

Die Lagerhülse kann auch einstückig mit dem ersten Radkörper gefertigt sein. Bei einer solchen Ausgestaltung ist dann ferner vorzugsweise eine Anlaufscheibe vorgesehen.

Gemäß einer weiteren bevorzugten Ausgestaltung der Erfindung sind zur axialen Abstützung ein erstes und ein zweites Axiallager vorgesehen, die vorzugsweise abschnittsweise an einem ersten bzw. zweiten Gleichlaufkörper ausgebildet sind. Durch eine solche Ausgestaltung ist eine sehr präzise Lagerung unter Verwendung vergleichsweise weniger Komponenten möglich.

Gemäß einer weiteren bevorzugten Ausgestaltung der Erfindung sind an dem ersten und an dem zweiten Radkörper Synchronteile vorgesehen.

Die Vorteile der Erfindung zeigen sich insbesondere an einem Doppelkupplungsgetriebe gemäß dem Oberbegriff des Anspruchs 10, wenn ein zur Darstellung des Rückwärtsgangs vorgesehenes Losrad und ein dazu benachbartes Losrad zur Darstellung eines Vorwärtsgangs als schaltbares Doppelrad nach einem der Ansprüche 1 bis 9 ausgebildet sind. Daher wird auch für ein Doppelkupplungsgetriebe selbstständig Schutz beansprucht. Hinsichtlich der Wirkungsweisen und Vorteile wird auf die Beschreibung des erfindungsgemäßen schaltbaren Doppelrades ausdrücklich Bezug genommen und verwiesen.

Weitere vorteilhafte Ausgestaltungen und Weiterbildungen der Erfindung ergeben sich aus den Unteransprüchen sowie aus der Beschreibung im Zusammenhang mit den Zeichnungen.

Dabei zeigen:
- Fig. 1: Eine besonders bevorzugte Ausführungsform eines erfindungsgemäßen Doppelkupplungsgetriebes,
- Fig. 2: einen Ausschnitt aus Fig. 1 als detaillierte Konstruktionszeichnung und
- Fig. 3: eine nicht unter Schutz gestellte zweite Ausführungsform zur konstruktiven Gestaltung des in Fig. 2 gezeigten Ausschnitts.

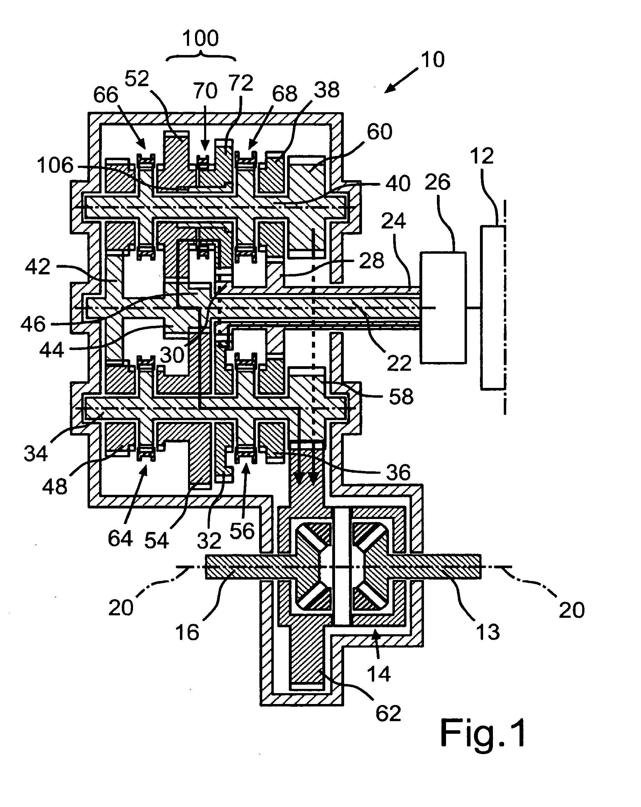

In Fig. 1 ist ein Doppelkupplungsgetriebe 10 in frontquer-Bauweise gezeigt. In der Zeichnungsebene liegt ein verbrennungsmotorischer Antriebsmotor 12 dabei rechts. Ein Differential 14 mitsamt seinen Radantriebshalbwellen 16, 18 zum Abtrieb auf eine Vorderachse 20 liegt in der Zeichnungsebene unten. Die dargestellten Getriebewellen sind dabei nur zur Vereinfachung in einer Zeichnungsebene dargestellt. In der praktischen Umsetzung sind die vier geometrischen Hauptachsen räumlich parallel versetzt zueinander.

Das Doppelkupplungsgetriebe 10 weist eingangsseitige Getriebeeingangswellen auf, von denen die eine als radial innere Innenwelle 22 und die andere als den axial rechten Teilbereich der Innenwelle 22 umschließende äußere Hohlwelle 24 ausgeführt ist.

Am rechten bzw. dem Antriebsmotor 12 nahestehenden Ende der beiden Getriebeeingangswellen 22, 24 liegen die beiden nicht näher dargestellten Hauptkupplungen der Doppelkupplung 26. Jede der beiden Hauptkupplungen ist in nicht näher dargestellter Weise unabhängig von der jeweils anderen Hauptkupplung reibschlüssig mit dem Antriebsmotor 12 kuppelbar. Zwischen der Doppelkupplung 26 und den auf den beiden Getriebeeingangswellen 22, 24 aufgereihten Zahnrädern liegt eine Trennwand, an welcher die Hohlwelle 24 mittels einer Wälzlagerung axial abgestützt und radial gelagert ist. Die Wälzlagerung ist als abgedichtetes einreihiges Rillenkugellager ausgeführt. Die Trennwand erstreckt sich radial außen nach rechts und bildet somit eine Kupplungsglocke zur Aufnahme der Doppelkupplung.

Mit von rechts nach links abnehmenden Durchmesser sind zwei axial aufeinander folgende Festräder 28, 30 drehfest mit der Hohlwelle 24 verbunden. Die beiden Festräder 28, 30 sind dabei einteilig mit der Hohlwelle 24.

Auf der dem Antriebsmotor 12 zugewandten Seite ist ein ebenfalls am Rillenkugellager anliegender Sicherungsring in eine Ringnut der Hohlwelle 24 eingesetzt. Das zweite Festrad 30 ist dem zweiten Vorwärtsgang 2nd zugeordnet und kämmt mit einem Losrad 32, welches auf einer unteren Vorgelegewelle 34 angeordnet ist. Das erste Festrad 28 auf der Hohlwelle 24 ist dem vierten Vorwärtsgang 4th zugeordnet und kämmt mit einem Losrad 36, welches auf der unteren Vorgelegewelle 34 angeordnet ist. Ferner ist das erste Festrad 28 dem sechsten Vorwärtsgang 6th zugeordnet und kämmt mit einem Losrad 38, welches auf der oberen Vorgelegewelle 40 angeordnet ist.

Die beiden Vorgelegewellen 34, 40 sind an deren beiden Enden jeweils zapfenförmig ausgebildet und mittels Kegelrollenlagern in X-Anordnung gegenüber einem dreigeteilten Getiebegehäuse gelagert, welches aus der besagten Trennwand mit einer integralen Kupplungsglocke, einem Radsatzgehäuse und einem Hauptwellendeckel besteht.

Die Innenwelle 22 ragt aus der umgebenden Hohlwelle 24 axial heraus. Auf dem herausragenden Bereich der Innenwelle 22 sind die drei Festräder 42, 44, 46 angeordnet. Diese drei Festräder 42, 44, 46 nehmen von einem linken Ende der Innenwelle 22 in die nach rechts weisende Richtung vom Durchmesser her ab. Am äußersten linken Ende ist die Innenwelle 22 mittels eines als abgedichtetes Rillenkugellager ausgeführten Wälzlagers in dem Radsatzgehäuse gelagert. Dieses Radsatzgehäuse ist als separates Teil zu der zuvor genannten Trennwand ausgeführt.

Das vom Durchmesser größte Festrad 42 der Innenwelle 22 ist dem fünften Vorwärtsgang 5th zugeordnet und kämmt mit einem Losrad 48 der unteren Vorgelegewelle 34. Ferner kämmt das größte Festrad 42 mit einem Losrad 50 der oberen Vorgelegewelle 40. Letzteres Losrad 50 ist dem siebenten Vorwärtsgang 7th zugeordnet. Damit kämmen das größte Festrad 42 und die beiden Losräder 48, 50 in einer Zahnradebene. Das vom Durchmesser mittlere Festrad 44 der Innenwelle 22 ist dem dritten Vorwärtsgang 3rd zugeordnet und kämmt mit einem Losrad 52 der oberen Vorgelegewelle 40. In der Zahnradebene dieses Losrades liegt an der unteren Vorgelegewelle 34 kein Zahnrad. Das vom Durchmesser kleinste Festrad 46 der Innenwelle 22 ist dem ersten Vorwärtsgang 1st zugeordnet und kämmt mit einem Losrad 54 auf der unteren Vorgelegewelle 34.

Rechts neben dem Losrad 32, welches dem zweiten Vorwärtsgang 2nd zugeordnet ist, liegt eine Gangwechselkupplung 56 koaxial zur unteren Vorgelegewelle 34. Mit dieser Gangwechselkupplung 56 ist das zuvor genannte Losrad 32 mit der Vorgelegewelle 34 drehfest koppelbar, so dass ein Drehmoment auf ein am rechten Ende vor dem Kegelrollenlager liegendes Abtriebsritzel 58 übertragbar ist.

Dieses kleine Abtriebsritzel 58 und ein großes Abtriebsritzel 60, welches am rechten Ende der oberen Vorgelegewelle 40 vor deren Kegelrollenlager liegt, kämmen beide mit einem stirnverzahnten Antriebszahnrad 62 des Differentials 14.

Die Gangwechselkupplung 56 ist ferner mit dem Losrad 36 koppelbar, so dass zum Einlegen des vierten Vorwärtsganges 4th eine drehfeste Verbindung zwischen der unteren Vorgelegewelle 34 und dem Losrad 36 herstellbar ist.

Auf der unteren Vorgelegewelle 34 ist eine weitere Gangwechselkupplung 64 axial zwischen den beiden Losrädern 48, 54 vorgesehen, mit welcher alternativ eines der beiden Losräder 48, 54 mit der unteren Vorgelegewelle 34 drehfest koppelbar ist, so dass der fünfte Vorwärtsgang 5th oder alternativ der erste Vorwärtsgang 1st eingelegt ist.

Koaxial auf der oberen Vorgelegewelle 40 liegt eine Gangwechselkupplung 66 zwischen den beiden Losrädern 50, 52, welche den siebenten Vorwärtsgang 7th und dem dritten Vorwärtsgang 3rd zugeordnet sind. Alternativ ist mit dieser Gangwechselkupplung 66 das Losrad 50 oder das Losrad 52 mit der Vorgelegewelle 40 drehfest kuppelbar.

Dem sechsten Vorwärtsgang 6th ist eine weitere Gangwechselkupplung 68 zugeordnet.

Die Innenwelle ist mittels zwei zweireihigen Nadellagern innerhalb der Hohlwelle wälzgelagert abgestützt. Axial zwischen den beiden Nadellagern liegt ein konischer Bereich. In die Innenwelle ist vom linken Ende her eine Sacklochbohrung eingebohrt, die axial vor und nach dem konischen Bereich mit Querbohrungen an den Nadellagern versehen ist. Diese Querbohrungen versorgen die beiden Nadellager mit Schmier- und Kühlmittel. Zur Zuführung des Schmier- und Kühlmittels in die Sacklochbohrung ragt eine Einführhülse in einen Eingangsbereich der Sacklochbohrung.

Die beiden Vorgelegewellen 34, 40 verfügen an deren beiden rechten Enden ebenfalls über ähnliche Schmiermittelzuführungen. Diese sind jedoch unmittelbar in Lageraugen der Trennwand eingesetzt. Ferner sind die beiden Vorgelegewellen 34, 40 mit zentralen Bohrungen und Querbohrungen zur Schmiermittelversorgung insbesondere der Nadellager der Losräder, aber auch der Zahnreingriffe versehen.

Mit dem beschriebenen Doppelkupplungsgetriebe 10 ist eine Antriebsleistung
- im einzigen Rückwärtsgang Rev. von der zweiten Hauptkupplung,
- im ersten Vorwärtsgang 1st von der ersten Hauptkupplung,
- im zweiten Vorwärtsgang 2nd von der zweiten Hauptkupplung,
- im dritten Vorwärtsgang 3rd von der ersten Hauptkupplung,
- im vierten Vorwärtsgang 4th von der zweiten Hauptkupplung.
- im fünften Vorwärtsgang 5th von der ersten Hauptkupplung,
- im sechsten Vorwärtsgang 6th von der zweiten Hauptkupplung und
- im siebenten Vorwärtsgang 7th von der ersten Hauptkupplung
auf das Differential 14 bzw. die Vorderachse 20 übertragbar. D. h. jeder Gang ist zu seinem sequentiell benachbarten Gang lastschaltbar, da ein Gangwechsel einen Wechsel der Hauptkupplung bedeutet.

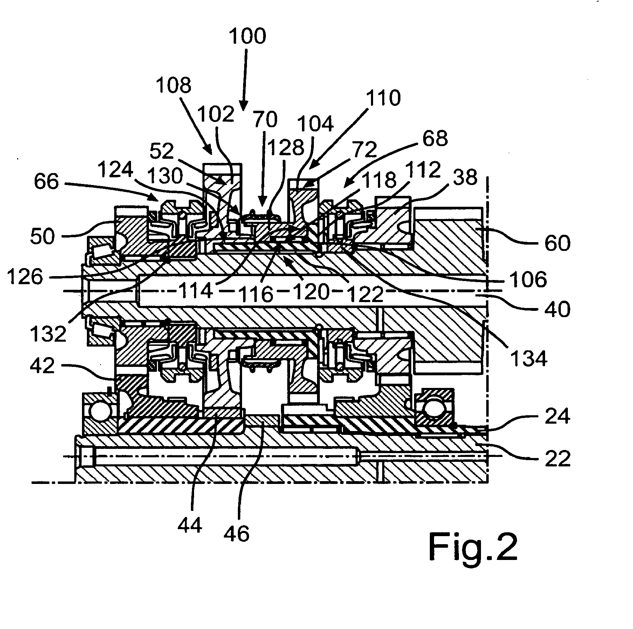

Um den Rückwärtsgang Rev. vor dem Einrücken der zweiten Hauptkupplung im Radsatz einzulegen, werden die zwei Gangwechselkupplungen eingerückt. Dazu wird zum einen eine in der folgenden Fig. 2 beschriebene Schaltmuffe 70 axial nach links verschoben. Dadurch ist eine drehfeste Verbindung zwischen zwei dann gemeinsam gegenüber der oberen Vorlegewelle 40 rotierbaren Losrädern hergestellt, nämlich zwischen dem Losrad 52 und einem Losrad 72. Ferner wird eine Schaltmuffe der Gangwechselkupplung 64 axial nach rechts verschoben, so dass das Losrad 54 des ersten Vorwärtsganges 1st drehfest mit der unteren Vorgelegewelle 34 gekoppelt ist. Der vom Antriebsmotor 12 kommende Leistungsfluss des Rückwärtsganges Rev. verläuft dann von der zweiten Hauptkupplung über die Hohlwelle 24 auf
- das drehfest auf dieser angeordnete Festrad 30,
- das dem zweiten Vorwärtsgang 2nd zugeordnete Losrad 32, welches mit dem Festrad 30 kämmt,
- das dem Rückwärtsgang Rev. zugeordnete Losrad 72, welches mit dem Losrad 32 kämmt,
- das dem dritten Vorwärtsgang 3rd zugeordnete Losrad 52, welches mittels der Schaltmuffe 70 drehfest zu dem Losrad 72 ist,
- das mittlere Festrad 44 auf der Innenwelle 22, welches mit dem Losrad 72 kämmt,
- das kleine (rechte) Festrad 46 auf der Innenwelle 22, welches drehfest zu dem Festrad 44 ist,
- das dem ersten Vorwärtsgang 1 st zugeordnete Losrad 54, welches mit dem kleinen Festrad 46 kämmt,
- das kleine Abtriebsritzel 58, welches mittels der Gangwechselkupplung 64 drehfest zu dem Losrad 54 ist,
- das mit dem kleinen Abtriebsritzel 58 kämmende Antriebszahnrad 62 des Differentials 14 auf die Radantriebshalbwellen 16, 18 zum Abtrieb auf eine Vorderachse 20.

Fig. 2 zeigt ein Detail aus Fig. 1 mit der Schaltmuffe 70 (Gangwechselkupplung) zum Schalten der Losräder 52, 72, die ein schaltbares Doppelrad 100 bilden. Das aus den Losrädern 52, 72 gebildete schaltbare Doppelrad 100 bildet in der in Fig. 2 gezeigten besonders bevorzugten ersten Ausführungsform der Erfindung eine Montageeinheit, wobei diese einen ersten Radkörper 102 und einen zweiten Radkörper 104 aufweist, die unverlierbar über eine Lagerhülse 106 miteinander verbunden sind. Der erste Radkörper 102 weist eine Schrägverzahnung 108 auf, mit welcher dieser, dem dritten Vorwärtsgang zugeordnete Radkörper 102 als Losrad mit dem mittleren Festrad 44 der Innenwelle 22 kämmt. Der zweite Radkörper 104 weist eine Geradverzahnung 110 auf.

Die Lagerhülse 106, die die beiden Radkörper 102, 104 zusammenhält, ist nach Art eines dünnwandigen Rohres mit einem Kragen 112 gefertigt, wobei der Kragen 112 an seiner Innenseite einen Anschlag 114 bildet, gegen den der zweite Radkörper 104 anliegt. Die Lagerhülse 106, welche keinerlei dem Antrieb dienenden Momente aufzunehmen hat, und die deswegen dünnwandig ausgeführt sein kann, weist an ihrer Außenseite einen ersten Aufnahmebereich 116 für ein erstes Nadellager 118 auf, welches den zweiten Radkörper abstützt. An ihrer Innenseite weist die Lagerhülse 106 einen zweiten Aufnahmebereich 120 für ein zweites Nadellager 122 auf, mit welchem das schaltbare Doppelrad 100 gegenüber der oberen Vorgelegewelle 40 gelagert ist.

Da die Lagerhülse 106 nur eine geringe Wandstärke aufweist und in eine in dem ersten Radkörper 102 eingebrachte, sich axial erstreckende Aufnahmevertiefung 124 eingepresst ist, ergibt sich durch den Kragen 112 und den nach radial außen über die Lagerhülse 106 vorstehenden ersten Radkörper 102 ein im Querschnitt u-förmiger Aufnahmebereich für den zweiten Radkörper 104, wobei der zweite Radkörper 104 in Abhängigkeit von der Schaltstellung der Schaltmuffe 70 gegenüber der Lagerhülse 106 rotierbar ist.

Die axial einander gegenüberliegenden Ringflächen, die den Aufnahmebereich für den zweiten Radkörper 104 begrenzen und von denen die eine Ringfläche der Anschlag 114 ist, sind als Gleitlagerflächen ausgebildet. Dementsprechend sind auch die auf diese Flächen bezogenen, sich senkrecht zur Konstruktionsachse erstreckenden Ringabschnitte des zweiten Radkörpers 104 als Gleitlagerflächen ausgebildet. Einer dieser Ringabschnitte, nämlich ein in Fig. 2 links liegender zweiter Ringabschnitt 126 des zweiten Radkörpers ist dabei auf einen ersten Ringabschnitt 128 des ersten Radkörpers 102 bezogen, so dass der zweite Radkörper 104 in axialer Richtung sicher gelagert ist. Um in an sich üblicher Art und Weise eine drehfeste Verbindung zwischen dem ersten und dem zweiten Radkörper 102, 104 über die Schaltmuffe 70 in einem Zustand synchroner Rotation der beiden Radkörper herstellen zu können, sind an dem ersten und dem zweiten Radkörper Synchronteile 130 vorgesehen.

In dem in Fig. 2 gezeigten in ein Doppelkupplungsgetriebe 10 eingebauten Zustand wird das schaltbare Doppelrad 100 gegenüber der Vorgelegewelle 40 mittels lediglich zweier Axiallager abgestützt, wobei diese Axiallager an einem ersten bzw. zweiten Gleichlaufkörper 132, 134 ausgebildet sind. Die Gleichlaufkörper 132, 134 sind als Baugruppe der Gangwechselkupplungen 66, 68 ausgebildet.

Bei dem Doppelkupplungsgetriebe 10 ist der kritische Lastfall ein Fahren im dritten Gang. In diesem Gang rotieren wegen der Gestaltung des Rückwärtsganges die Losräder 52, 72 (Radkörper 102, 104) gegenläufig, so dass sich zwischen diesen eine sehr hohe Differenzdrehzahl ergeben kann. Diese hohe Differenzdrehzahl ist jedoch nicht mehr lagerungsrelevant, denn das Losrad 52 (der Radkörper 102) stützt sich einerseits an dem Gleichlaufkörper 132 und andererseits - unter Umgehung des Losrades 72 (Radkörper 104) -über die Lagerhülse 106 an dem Gleichlaufkörper 134 ab.

Das schaltbare Doppelrad 100 gemäß der in Fig. 2 gezeigten, besonders bevorzugten Ausführungsform vermeidet also hohe Differenzdrehzahlen im kritischen Lastfall, womit die Funktion und der Aufbau eines erfindungsgemäßen Doppelkupplungsgetriebes 10 gemäß einer besonders bevorzugten Ausführungsform verbessert sind.

Zu der Funktion der besonders bevorzugten Ausführungsform eines Doppelkupplungsgetriebes 10 sei noch erwähnt, dass mit der auf der oberen Vorgelegewelle 40 angeordneten Gangwechselkupplung 66, die den Gleichlaufring 132 umfasst, das Losrad 52 des Doppelrades 100 mit der Vorgelegewelle 40 drehfest verbindbar ist.

Der Gleichlaufring 132 ist drehfest mit der Vorgelegewelle 40 verbunden. Der Gleichlaufring 132 ist auch zur Kopplung mit dem Losrad 50 vorgesehen. Hierfür ist auf dem Gleichlaufring 132 eine in axialer Richtung verschiebbare Schaltmuffe der Schalteinheit gelagert, mittels der der Gleichlaufring mit dem Losrad 52 des Doppelrades 100 und alternativ mit dem Losrad 50 drehfest koppelbar ist. Die Schaltmuffe weist an ihrem Außenumfang eine umlaufende Nut zum Eingriff einer nicht näher dargestellten Schaltgabel oder Schaltschwinge auf.

In der schematischen Darstellung gemäß Fig. 1 sind die Gangwechselkupplungen als ausschließlich formschlüssige Schaltklauenkupplungen dargestellt. Hingegen sind die Gangwechselkupplungen in der konkreteren Darstellung gemäß Fig. 2 als Synchronringe dargestellt. In der Praxis sind sowohl die Ausführung mit Synchronringen als auch mit Schaltklauenkupplungen möglich.

Die beiden Abtriebsritzel müssen nicht den dargestellten Unterschied im Durchmesser aufweisen. In einer alternativen Ausgestaltung können beide Abtriebsritzel den gleichen Durchmesser ausweisen.

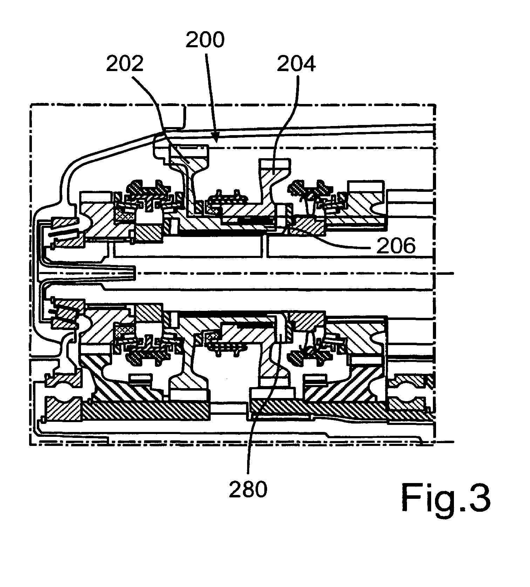

Ein Doppelkupplungsgetriebe, das in jeder Hinsicht wie das zuvor beschriebene Doppelkupplungsgetriebe 10 gemäß einer ersten Ausführungsform aufgebaut ist und funktioniert, ist auch in einer nicht unter Schutz gestellten Ausführungsform darstellbar, wenn - wie in Fig. 3 gezeigt - ein schaltbares Doppelrad 200 vorgesehen ist, das eine Lagerhülse 206 aufweist, die einstückig mit einem ersten Radkörper 102 ausgebildet ist. Zur axialen Abstützung der Hülse 206 und eines zweiten Radkörpers 204 ist dann eine Anlaufscheibe 280 vorgesehen. Hinsichtlich der Funktion ändert sich dadurch nichts. Lediglich die Teilefertigung und der Zusammenbau sind unterschiedlich. Der Vorteil, dass in dem kritischen Lastfall bei der Abstützung des ersten Radkörpers 202 der zweite Radkörper 204 umgangen wird, bleibt erhalten.

Beide bevorzugten Ausführungsformen erlauben die Verwendung von Standardkomponenten, so dass die Herstellung erleichtert wird. Beide bevorzugten Ausführungsformen weisen kürzere Toleranzketten als der Stand der Technik auf, und auch die Einstellung der Lagerung ist erleichtert.

## Patentansprüche

1. Schaltbares Doppelrad für ein Doppelkupplungsgetriebe, mit einem gegenüber einer Welle zu lagernden ersten Radkörper (102; 202) und einem zweiten Radkörper (104; 204), welche verdrehfest miteinander kuppelbar sind,
wobei eine Lagerhülse (106; 206) vorgesehen ist, die verdrehfest mit dem ersten Radkörper (102; 202) ausgebildet ist und zur Lagerung des zweiten Radkörpers (104; 204) einen ersten Lagerbereich aufweist,
**dadurch gekennzeichnet, dass**
die Lagerhülse (106) als separates Bauelement gefertigt und mit dem ersten Radkörper (102) verpresst ist.

2. Schaltbares Doppelrad nach Anspruch 1,
**dadurch gekennzeichnet, dass**
zur verdrehfesten Verbindung des ersten und des zweiten Radkörpers (102, 104) eine Kupplung mit einer Schaltmuffe (70) vorgesehen ist.

3. Schaltbares Doppelrad nach Anspruch 1 oder 2,
**dadurch gekennzeichnet, dass**
die Lagerhülse (106) auf ihrer Außenseite einen ersten Aufnahmebereich (116) für ein erstes Nadellager (118) zur Lagerung des zweiten Radkörpers (104) aufweist.

4. Schaltbares Doppelrad nach einem der Ansprüche 1 bis 3,
**dadurch gekennzeichnet, dass**
die Lagerhülse (106) auf ihrer Innenseite, vorzugsweise über ihre gesamte axiale Erstreckung einen zweiten Aufnahmebereich (120) für ein zweites Nadellager (122) zur Lagerung gegenüber der Welle aufweist.

5. Schaltbares Doppelrad nach einem der Ansprüche 1 bis 4,
**dadurch gekennzeichnet, dass**
ein erster Ringabschnitt (128) des ersten Radkörpers (102) und ein zweiter Ringabschnitt (126) des zweiten Radkörpers (104) als aufeinander bezogene Gleitlagerflächen ausgebildet sind.

6. Schaltbares Doppelrad nach einem der Ansprüche 1 bis 5,
**dadurch gekennzeichnet, dass**
die Lagerhülse (106) eine stirnseitige Abstützfläche (132) aufweist.

7. Schaltbares Doppelrad nach einem der Ansprüche 1 bis 6,
**dadurch gekennzeichnet, dass**
die Lagerhülse (106) einen ersten Anschlag (114) zur axialen Abstützung des zweiten Radkörpers (104) aufweist.

8. Schaltbares Doppelrad nach einem der Ansprüche 1 bis 7,
**dadurch gekennzeichnet, dass**
zur axialen Abstützung ein erstes und ein zweites Axiallager vorgesehen sind, die vorzugsweise abschnittsweise an einem ersten bzw. zweiten Gleichlaufkörper (132, 134) ausgebildet sind.

9. Schaltbares Doppelrad nach einem der Ansprüche 1 bis 8,
**dadurch gekennzeichnet, dass**
an dem ersten und dem zweiten Radkörper (102, 104) Synchronteile (130) vorgesehen sind.

10. Doppelkupplungsgetriebe, mit einer Hohlwelle (24) und einer Innenwelle (22), die über eine Doppelkupplung (26) an eine Antriebsmaschine (12) kuppelbar sind, einer ersten und einer zweiten Vorgelegewelle (34, 40), deren Abtriebsritzel (58, 60) ein Antriebsrad (62) eines Differentials (14) antreiben, wobei an der Hohlwelle (24) Festräder (28, 30) ausgebildet, die mit Losrädern, die auf der ersten bzw. zweiten Vorgelegewelle (34, 40) gelagert sind, kämmen, wobei ein Losrad (72) ist zur Darstellung des Rückwärtsgangs einem Losrad (52) zur Darstellung eines Vorwärtsgangs benachbart angeordnet ist,
**dadurch gekennzeichnet, dass**
das Losrad (72) zur Darstellung des Rückwärtsgang und das benachbarte Losrad (52) zur Darstellung eines Vorwärtsgangs als schaltbares Doppelrad (100) nach einem der Ansprüche 1 bis 9 ausgebildet sind.

## Claims

1. Shiftable twin gear for a twin-clutch gearbox, comprising a first gear body (102; 202) to be supported with respect to a shaft and a second gear body (104; 204), which gear bodies can be non-rotatably coupled to one another, wherein a bearing sleeve (106; 206) non-rotatably connected to the first gear body (102; 202) and having a first bearing region for the support of the second gear body (104; 204) is provided,
**characterised in that**
the bearing sleeve (106) is produced as a separate component and press-fitted to the first gear body (102).

2. Shiftable twin gear according to claim 1,
**characterised in that**
a clutch with a selector sleeve (70) is provided for the non-rotatable connection of the first and second gear bodies (102, 104).

3. Shiftable twin gear according to claim 1 or 2,
**characterised in that**
the bearing sleeve (106) has on its outside a first locating region (116) for a first needle bearing (118) for the support of the second gear body (104).

4. Shiftable twin gear according to any of claims 1 to 3,
**characterised in that**
the bearing sleeve (106) has on its inside, preferably along its entire axial dimension, a second locating region (120) for a second needle bearing (122) for support with respect to the shaft.

5. Shiftable twin gear according to any of claims 1 to 4,
**characterised in that**
a first annular section (128) of the first gear body (102) and a second annular section (126) of the second gear body (104) are designed as interacting plain bearing surfaces.

6. Shiftable twin gear according to any of claims 1 to 5,
**characterised in that**
the bearing sleeve (106) has a support surface (132) on its end face.

7. Shiftable twin gear according to any of claims 1 to 6,
**characterised in that**
the bearing sleeve (106) has a first stop (114) for the axial support of the second gear body (104).

8. Shiftable twin gear according to any of claims 1 to 7,
**characterised in that**
a first and a second thrust bearing, sections of which are preferably formed on a first and a second synchroniser hub (132, 134), are provided for axial support.

9. Shiftable twin gear according to any of claims 1 to 8,
**characterised in that**
synchroniser parts (130) are provided on the first and second gear bodies (102, 104).

10. Twin-clutch gearbox, comprising a hollow shaft (24) and an inner shaft (22), which can be coupled to a drive engine (12) via a twin clutch (26), and further comprising a first and a second layshaft (34, 40), the drive pinions (58, 60) of which drive a drive gear (62) of a differential (14), wherein fixed gears (28, 30), which mesh with idler gears supported on the first and the second layshaft (34, 40) respectively, are formed on the hollow shaft (24), wherein an idler gear (72) for the representation of the reverse gear is arranged adjacent to an idler gear (52) for the representation of a forward gear,
**characterised in that**
the idler gear (72) for the representation of the reverse gear and the adjacent idler gear (52) for the representation of a forward gear are designed as a twin gear (100) according to any of claims 1 to 9.

## Revendications

1. Roue double embrayable destinée à une transmission à double engrenage, dotée d'un premier corps de roue (102, 202) devant être logé par rapport à un arbre et un second corps de roue (104, 204), qui peuvent être couplés solidaire en rotation l'un à l'autre, un manchon de palier (106, 206) étant disposé solidaire en rotation avec le premier corps de roue (102, 202) et présente pour la mise en place du second corps de roue (104, 204) une première zone de logement, **caractérisée en ce que** le manchon de palier (106) est fabriqué comme un composant séparé et est comprimé avec le premier corps de roue (102).

2. Roue double embrayage selon la revendication 1, **caractérisée en ce que** pour la liaison solidaire en rotation du premier et du second corps de roue (102, 104) on prévoit un embrayage doté d'un manchon de changement de vitesse (70).

3. Roue double embrayage selon la revendication 1 ou la revendication 2, **caractérisée en ce que** le manchon de palier (106) présente sur son côté extérieur une première zone de réception (116) pour un premier palier à aiguilles (118) destiné à la mise en place du second corps de roue (104).

4. Roue double embrayage selon l'une quelconque des revendications 1 à 3, **caractérisée en ce que** le manchon de palier (106) présente, sur son côté extérieur, de préférence sur toute son étendue axiale, une seconde zone de réception (120) pour un second palier à aiguilles (122) destiné à la mise en place par rapport à l'arbre.

5. Roue double embrayage selon l'une quelconque des revendications 1 à 4, **caractérisée en ce qu'**une première section annulaire (128) du premier corps de roue (102) et une seconde section annulaire (126) du second corps de roue (104) sont conçus comme des surfaces de palier lisse se rapportant les unes aux autres.

6. Roue double embrayage selon l'une quelconque des revendications 1 à 5, **caractérisée en ce que** le manchon de palier (106) présente une surface d'appui frontale (132).

7. Roue double embrayage selon l'une quelconque des revendications 1 à 6, **caractérisée en ce que** le manchon de palier (106) présente une première butée (114) destinée à l'appui axial du second corps de roue (104).

8. Roue double embrayage selon l'une quelconque des revendications 1 à 7, **caractérisée en ce qu'**on prévoit pour l'appui axial un premier et un second palier axial qui sont conçus de préférence par endroits sur un premier ou un second corps de synchronisme (132, 134).

9. Roue double embrayage selon l'une quelconque des revendications 1 à 8, **caractérisée en ce que** sur le premier et le second corps de roue (102, 104) sont disposées des parties synchrones (130).

10. Transmission à double embrayage, dotée d'un arbre creux (24) et d'une portée intérieure (22), qui peuvent être couplées au moyen d'un double embrayage (26) sur un moteur d'entraînement (12), d'un premier et d'un second arbre intermédiaire (34, 40), dont les pignons de sortie (58, 60) entraînent une roue d'entraînement (62) d'un différentiel, sur l'arbre creux (24) étant disposées des roues fixes (28, 30) qui dotées de pignons fous lesquels sont disposés sur le premier ou sur le second arbre intermédiaire (34, 40), s'engrènent, un pignon fou (72) destiné à la présentation du rapport arrière étant adjacent à un pignon fou (52) destiné à la présentation d'un rapport avant, **caractérisé en ce que** le pignon fou (72) destiné à la présentation du rapport arrière et le pignon fou (52) adjacent destiné à la présentation d'un rapport avant sont conçus en tant que roue double (100) embrayable selon l'une quelconque des revendications 1 à 9.
